Europäisches Patentamt

European Patent Office

Office européen des brevets

(19)

(11) EP 0 780 841 A2

(12) EUROPEAN PATENT APPLICATION

(43) Date of publication:
25.06.1997 Bulletin 1997/26

(51) Int Cl.$^6$: G11B 11/10

(21) Application number: 96309184.8

(22) Date of filing: 17.12.1996

(84) Designated Contracting States:
DE FR GB IT NL

(30) Priority: 21.12.1995 JP 333159/95

(71) Applicant: CANON KABUSHIKI KAISHA
Tokyo (JP)

(72) Inventor: Hiramatsu, Makoto
Ohta-ku, Tokyo (JP)

(74) Representative:
Beresford, Keith Denis Lewis et al
BERESFORD & Co.
2-5 Warwick Court
High Holborn
London WC1R 5DJ (GB)

(54) **Magnetooptical recording medium using a magnetic phase transformation material and a recording method using the medium**

(57) A magnetooptical recording medium includes a memory layer (1113) having an out of plane preferred direction of magnetization and an initializing layer (1117) having a magnetization in a predetermined direction perpendicular to the layer. An intermediate layer (1115) is interposed between the memory layer (1113) and the initializing layer (1117), the intermediate layer (1115) having a phase transformation from antiferromagnetic to ferromagnetic at temperature T1 for rising temperatures, and a phase transformation from ferromagnetic to antiferromagnetic at temperature T2 for declining temperatures. The temperatures T1, T2 and the Curie temperatures of the memory layer (1113) $T_{c1}$, and the initializing layer (1117) $T_{c3}$ have the following relationship: $T2 < T_{c1} < T1 < T_{c3}$.

FIG.13(b)

EP 0 780 841 A2

## Description

BACKGROUND OF THE INVENTION

Field of the Invention

This invention relates to a magnetooptical recording medium. In particular, this invention relates to a magnetooptical recording medium capable of being overwritten, and a recording method using the medium.

Related Background Art

In the past, the following three processes have been necessary in a magnetooptical recording apparatus:

(1) deleting former information already recorded on the magnetooptical recording medium,
(2) recording the new information; and
(3) verification of the recorded information.

The requirement for these three processes slows the possible recording rate.

To resolve this problem, an overwriting function which performs processes (1) and (2) at once has been proposed, using either a light modulation overwriting method or a magnetic field modulation overwriting method. In the magnetic field modulation overwriting method, an applied magnetic field is synchronously modulated with the recording information. In the light modulation overwriting method, the recording laser beam is synchronously modulated with the recording information and the applied magnetic field is not synchronously modulated with the recording information.

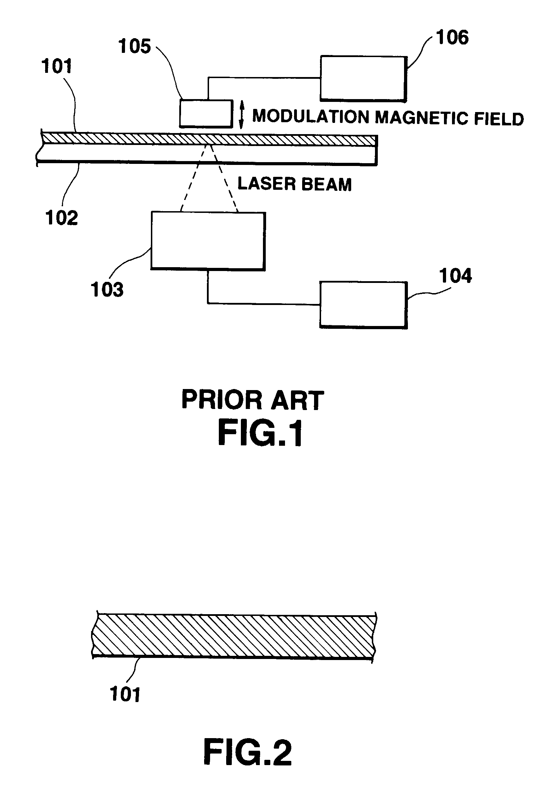

One example of a magnetic field modulation overwriting method is shown in Figure 1. In Figure 1, a magnetic film 101 is provided on a substrate 102 and is irradiated by a laser beam from an optical head 103. The luminous energy of the laser beam is controlled by a laser driving apparatus 104. A magnetic field is applied to the magnetic film 101 by a magnetic field applying apparatus 105 driven by a magnetic field drive apparatus 106.

When the magnetic field modulation overwriting method is adopted, a magnetic film 101 having a vertical magnetic anisotropy is used, for example, a ferrimagnetic thin film amorphous alloy made of rare earth transition metal such as TbFe and so on. In this case, a single layer film is used as shown in Figure 2.

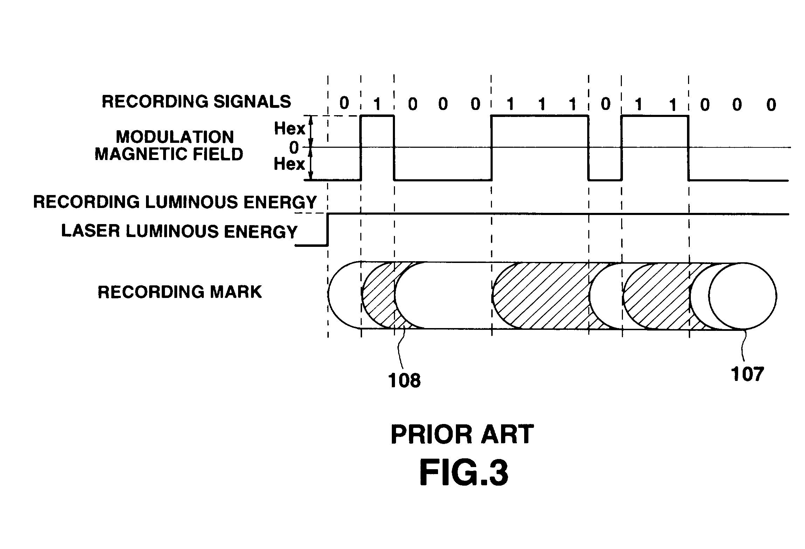

Referring now also to Figure 3, a magnetic field of amplitude $\pm H_{ex}$ is modulated synchronously with the recording signals by driving the magnetic field applying apparatus 105 by means of the magnetic field driving apparatus 106. At the same time, the luminous energy of the laser from the optical head is controlled by the laser driving apparatus 104 such that the recording beam has constant luminous energy. The recorded data is as shown in the bottom of the Figure 3, wherein 107 represents the beam spot of the laser beam, and 108 represents a recording mark formed where the applied magnetic field has a value $+H_{ex}$.

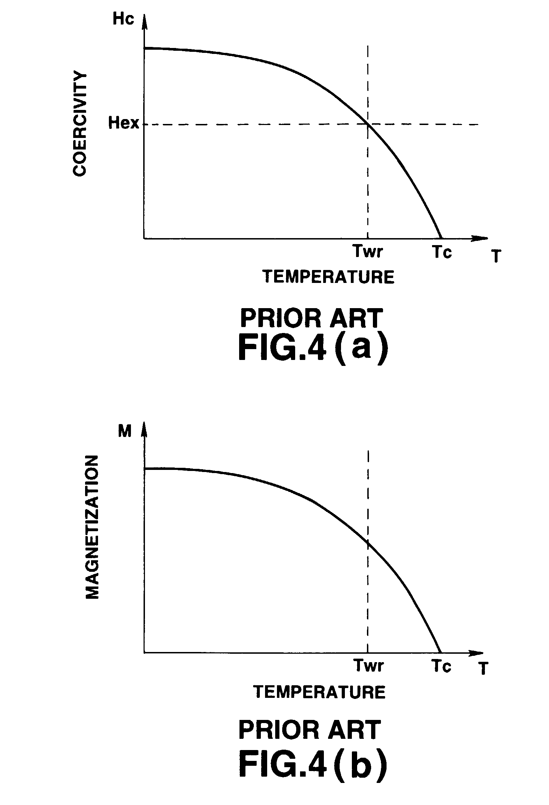

The recording process in this case is explained as follows. Figure 4(a) is a graph showing the relation between the coercivity $H_c$ of the magnetic film 101 and the temperature T of the magnetic film 101. Figure 4(b) is a graph showing the relation between the magnetization M of the magnetic film and the temperature T. Based on these graphs, it can be seen that when the temperature of the magnetic film becomes $T_{wr}$ or more due to the laser irradiation and the magnetic field $H_{ex}$ is applied, a reversal of the magnetization direction of the magnetic layer occurs.

Therefore, by raising the temperature of the magnetic film to $T_{wr}$ or more and applying the magnetic field of $H_{ex}$, the direction of magnetization of the magnetic film is aligned with the direction of the applied magnetic field. It is thus possible to record information by reversing the direction of the magnetic field according to the recording signals. In the magnetic field modulation overwriting method, recording and erasing of information are performed according to this process.

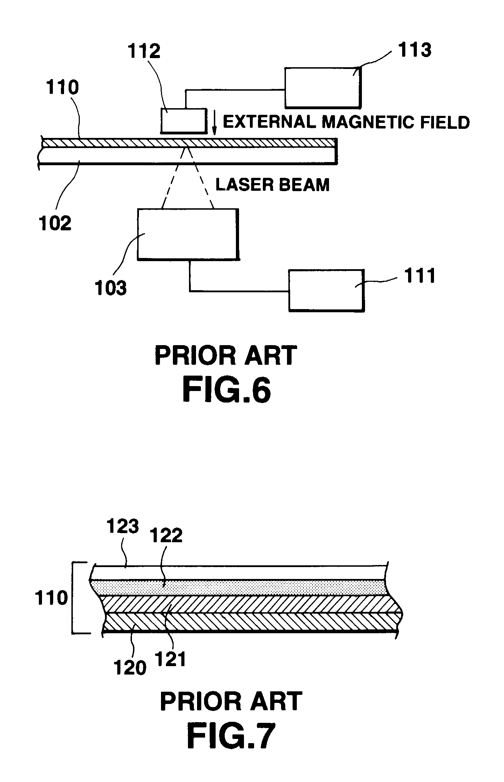

One example of the light modulation overwriting method is shown in Figure 6. In Figure 6, a magnetooptic recording medium 110 is provided on a substrate 102, and is irradiated by a laser beam from a optical head 103. The luminous energy of the laser beam is controlled by a laser driving apparatus 111. A magnetic field is applied to the magnetooptic recording medium 110 by a magnetic field applying apparatus 112. The magnetic field applying apparatus 112 is driven by a magnetic field driving apparatus 113.

The structure of the magnetooptic recording medium 110 is as shown in Figure 7. When the light modulation overwriting method is adopted, multi layered films made of magnetic material having vertical magnetic anisotropy are used. For example, multi layered thin film amorphous ferrimagnetic alloys made of rare earth transition metals such as TbFe and so on are used. In this particular example, four layers are used. These are from the bottom of the medium, a recording layer 120, a memory layer 121, a switching layer 122 and an initializing layer 123.

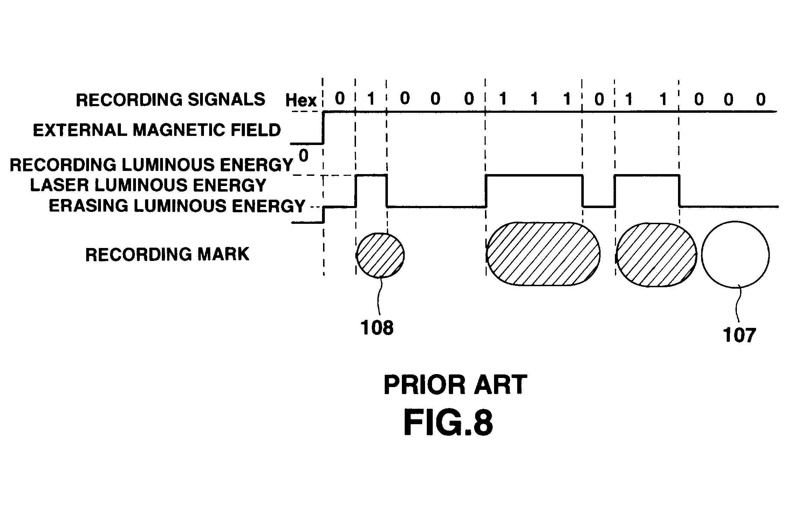

In Figure 6, the luminous energy from the optical head 103 is modulated by the laser driving apparatus 111 and the luminous energy is synchronously modulated with recording signals to produce recording luminous energy and erasing luminous energy pulses effective to heat the recording medium to respectively temperatures $T_{wr}$ and $T_{er}$. At the same time, the magnetic field applying means 112 is driven by the magnetic field drive apparatus 113, to produce an external magnetic field having a predetermined direction which is perpendicular to the face of the medium 110 to form recording marks as shown in the bottom of Figure 8 in which 107 is a beam spot of the laser beam and 108 is a recording mark.

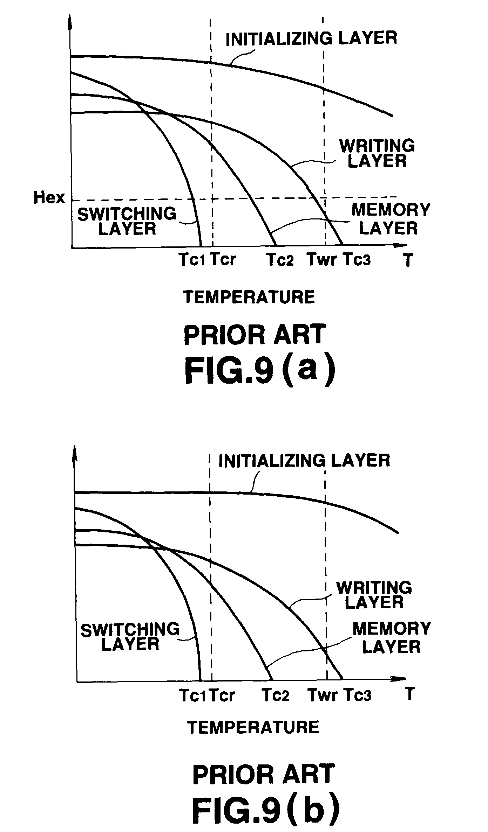

The recording process in this case is explained as follows. Figure 9(a) is a graph showing the relation between the coercivity $H_c$ of the magnetic films and the temperature T of the recording medium. Figure 9(b) is a graph showing the relation between the magnetization M of the magnetic films and the temperature T. $T_{c1}$ is the Curie temperature of switching layer 122, $T_{c2}$ is the Curie temperature of memory layer 120, and $T_{c3}$ is the Curie temperature of the recording layer 121. It is presumed that the Curie temperature $T_{c4}$ of the initializing layer 123 is very high and is located to the right side of the temperature axis of Figure 9.

At ambient temperatures, there is a domain wall between the memory layer 120 and recording layer 121. At high temperatures the direction of magnetization of the memory layer 120 and the direction of magnetization of the recording layer 121 become the same by the exchange coupling force between the layers 120, 121. In this condition, the directions of magnetization of the switching layer 122 and the recording layer 121, are usually aligned along the same direction as that of the initializing layer 123.

When the temperature of the magnetic layers is over $T_{C1}$, the exchange coupling between the initializing layer 123 and the recording layer 121 disappears, because the temperature of the switching layer 122 is over the Curie temperature $T_{C1}$. When the temperature of the magnetic layers is near to $T_{er}$, the magnetization direction of the memory layer 120 aligns with that of the writing layer 121 because of the exchange coupling force between the memory layer 120 and the writing layer 121. When the temperature of the magnetic layers is near to $T_{wr}$ and the external magnetic field $H_{ex}$ is applied, the magnetization directions of the memory layer 120 and the writing layer 121 align with the direction of the external magnetic field.

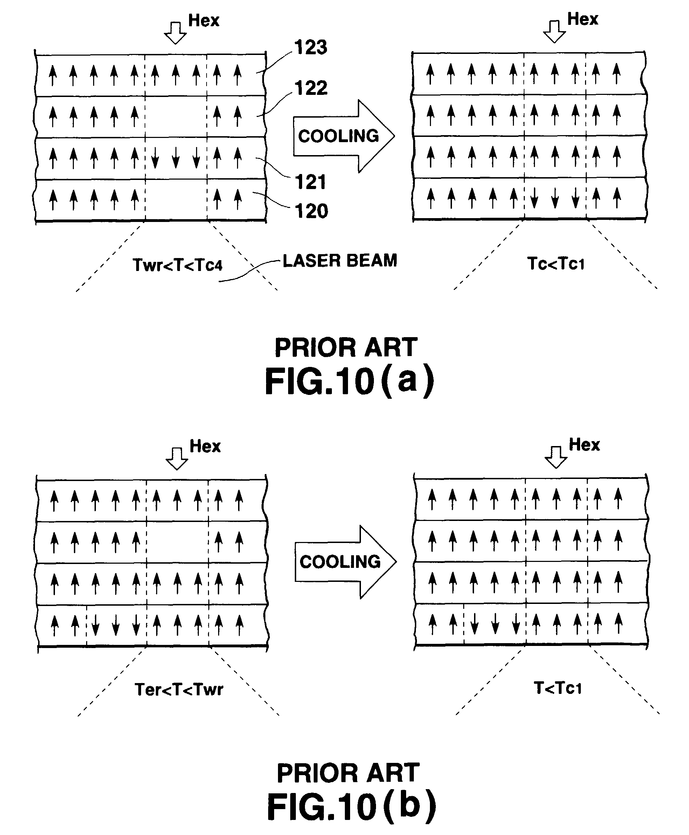

The magnetization direction of the initializing layer 123 is aligned in a chosen direction, and the external magnetic field $H_{ex}$ is applied to the magnetooptical recording medium. If the temperature T of the magnetic layers 120-123 rises to approximately $T_{wr}$, as shown in the left of Figure 10(a) the temperature of the memory layer 120 and the switching layer 122 exceed the Curie temperature $T_{c2}$ and the Curie temperature $T_{c1}$ and loses magnetization. As the coercivity of the recording layer 121 deteriorates, the magnetization direction of the recording layer 121 is aligned with the direction of the external magnetic field $H_{ex}$. When the temperature of the magnetic film cools down to $T_{c2}$ or less than $T_{c2}$, the emerging magnetization of the layer 120 is aligned with the direction of the recording layer 121.

When the magnetic film cools down to $T_{c1}$ or less than $T_{c1}$ by reducing the luminous energy of the laser beam, as shown in the right of Figure 10(a) the reduction in temperature of the magnetooptical recording medium gives rise to an exchange coupling between the initializing layer 123 and the recording layer 121 through the interpositioned switching layer 122. Therefore, the magnetization directions of the recording layer 121, switching layer 122 and the initializing layer 123 are aligned.

When the temperature of the magnetooptic recording medium is approximately $T_{er}$, as shown in the left of Figure 10(b) the temperature of the switching layer 122 exceeds the Curie temperature $T_{c1}$ causing the switching layer 122 to lose magnetization. The coupling between the initializing layer 123 and the recording layer 121 disappears although the coercivity and magnetization of the recording layer 121 remain. Therefore, the magnetization direction of the memory layer 120 is aligned in the same direction as that of the recording layer 121.

In the light modulation overwriting method, recording and erasing of information are executed according to this process.

The advantages of the magnetic field modulation overwriting method are as follows:

(1) An overwriting function can be added to a conventional recording film structure.
(2) A recording mark which is smaller than a light beam spot can be recorded.

The disadvantages of the magnetic field modulation overwriting method are as follows:

(1) Rapid modulation of the magnetic field is difficult.
(2) The optical head is complex and heavy because the optical head and a magnetic field applying means have to be driven synchronously. Therefore it is difficult to perform a high speed search for specific recorded data on the medium.

On the other hand, the advantages of the light modulation overwriting method are as follows:

(1) An overwriting function can be added without totally modifying a conventional recording/reproducing apparatus.
(2) High speed modulation of light is easier than high speed modulation of a magnetic field.

The disadvantages of the light modulation overwriting method are as follows:

(1) The structure of the recording film is complex.
(2) It is difficult to form a recording mark which is sufficiently smaller than the light beam spot.

In particular, using the magnetic field light modulation overwriting method, high speed modulation is difficult because of the inductive load of the magnetic field applying apparatus.

On the other hand, using the light modulation overwriting method, it is difficult to form a recording mark which is sufficiently smaller than the light beam spot as shown in Figure 8. If recording is executed, the C/N and S/N ratios of the reproducing signals deteriorate as does the quality of the signals because the length of the recording marks becomes short and the width of the recording mark becomes narrow.

As explained above, using the magnetic modulation overwriting method, it is difficult to obtain high speed, overwriting, and it is difficult to obtain high density recording. Namely there is a problem that it is difficult to obtain a magnetooptical recording/reproducing apparatus which satisfy high speed and high density recording.

SUMMARY OF THE INVENTION

An object of this invention is to at least alleviate these problems. Another object of this invention is to provide a magnetooptical recording medium and a magnetic recording method which may have high speed and high density recording.

According to a first aspect of the present invention there is provided a magnetooptical recording medium comprising: a memory layer having an out of plane preferred direction of magnetization and a Curie temperature $T_{c1}$; an intermediate layer comprising: a magnetic phase transformation material having a phase transformation from antiferromagnetic to ferromagnetic at temperature T1 for rising temperatures, and a phase transformation from ferromagnetic to antiferromagnetic at a temperature T2 for declining temperatures; and an initializing layer having a magnetization in a predetermined direction perpendicular to the layer and a Curie temperature Tc3; wherein, $T2 < T_{c1} < T1 < T_{c3}$.

According to a second aspect of the present invention there is provided a magnetooptical recording method using said magnetooptical recording medium according to any one of the preceding claims, comprising the steps of: applying an external magnetic field having the opposite direction of magnetization to that of said initializing layer; and either a first recording step of irradiating the medium to raise the temperature of said each layer to $T_{wr}$ which is higher than T1, and to give rise to a phase transformation to ferromagnetic in said intermediate layer to align the direction of magnetization of said memory layer with that of the initialization layer; or a second recording step of irradiating the medium to raise the temperature of said each layer to $T_{er}$ which is equal or greater than $T_{c1}$ and is equal or less than T1, and to align the direction of magnetization of said memory layer with the direction of said external magnetic field with the intermediate layer being antiferromagnetic.

BRIEF DESCRIPTION OF THE DRAWINGS

A number of embodiments of the invention will now be described, by way of example only, with reference to the accompanying drawings in which:

Figure 1 is a schematic illustration showing a magnetooptical recording/reproducing apparatus adopting a known conventional magnetic field modulation overwriting method;

Figure 2 is a schematic cross sectional view of a magnetic film of a magnetooptical recording medium adopting a magnetic field modulation overwriting method;

Figure 3 is a schematic illustration showing condition of information recording using a conventional magnetic field modulation overwriting method;

Figure 4 is a graph showing the characteristics of a magnetooptical recording medium for use with a conventional magnetic field modulation overwriting method;

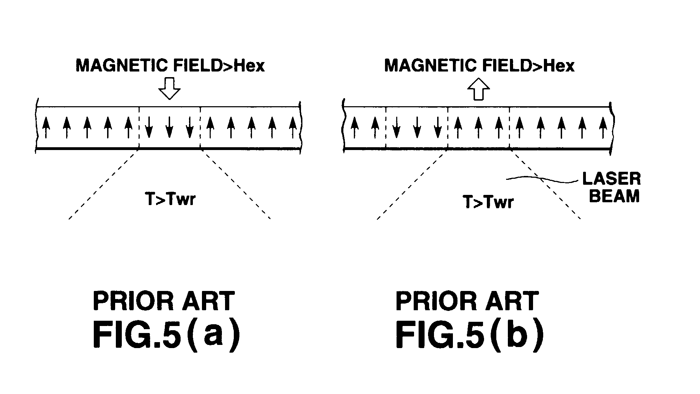

Figure 5 is a schematic illustration showing the recording and erasing processes in a conventional magnetic field modulation overwriting method;

Figure 6 is a schematic illustration showing a magnetooptical recording/reproducing apparatus which uses a conventional light modulation overwriting method;

Figure 7 is a schematic cross sectional view of a magnetooptical recording medium for use with a conventional light modulation overwriting method;

Figure 8 is a schematic illustration showing condition of information recording using a conventional light modulation overwriting method;

Figure 9 is a graph showing the characteristics of the magnetic layers of a magnetooptical recording medium which uses a conventional light modulation overwriting method;

Figure 10 is a schematic illustration showing recording and erasing processes in a conventional light modulation overwriting method;

Figure 11 is a schematic illustration showing a magnetooptical recording/reproducing apparatus which can be used for recording information on a magnetooptical recording medium in accordance with an embodiment of this invention;

Figure 12 is a schematic illustration showing a magnetooptical recording medium in accordance with an embodiment of the invention;

Figure 13(a) is a graph showing the relation between the temperature and coercivity of the magnetic layers in the medium;

Figure 13(b) is a graph showing the relation between the temperature and magnetization of the magnetic layers in the medium;

Figures 14(a) to 14(g) are schematic illustration showing recording and erasing processes in accordance with an embodiment of the invention; and

Figure 15 is a schematic illustration showing information recording marks in accordance with an embodiment of the invention.

## DESCRIPTION OF THE PREFERRED EMBODIMENTS

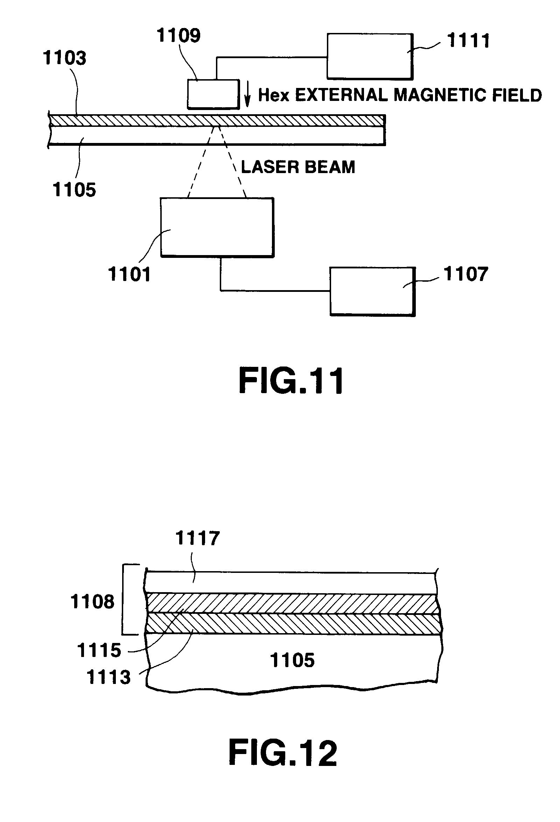

A number of embodiments of this invention will now be explained in detail with reference to Figures 11 to 15.

Figure 11 is a schematic illustration showing a magnetooptical disc recording/reproducing apparatus which can be used for an embodiment of a magnetic medium in accordance with this invention. It will be understood that by a magnetooptical recording/reproducing apparatus is meant an apparatus capable of recording information on a magnetooptical recording medium or reproducing information from the magnetooptical recording medium, or both recording information on and reproducing information from the magnetooptical recording medium.

The apparatus includes an optical head 1101 arranged to irradiate the recording medium with a laser beam, the recording medium comprising a stack of magnetic layers 1103 on a transparent substrate 1105. The luminous energy of the laser beam is controlled by a laser drive apparatus 1107. At the same time as the medium is irradiated by the laser, the apparatus is arranged to apply a magnetic field to the magnetic film 1103 by means of a magnetic field applying apparatus 1109. The magnetic field applying apparatus is driven by a magnetic field driving apparatus 1111.

Figure 12 illustrates the form of the stack of magnetic layers 1103. Starting from the transparent substrate 1105 side, the stack comprises a memory layer 1113 as a first magnetic layer, a magnetic intermediate layer 1115 as a second magnetic layer and an initializing layer 1117 as a third magnetic layer laminated in this order.

The memory layer 1113 and the initializing layer 1117 are composed of magnetic materials which have a vertical magnetic anisotropy. For example, rare earth - iron group amorphous alloys such as TbFeCo, DyFeCo, GdTbFeCo etc., platinum group - iron group periodic structure films such as garnet, Pt/Co, Pd/Co etc. may be used. The initializing layer 1117 has a large vertical magnetic anisotropy, using for example TbFeCo and a relatively high Curie temperature $T_{c3}$ due to a relatively large proportion of $T_{c3}$. In particular, the Curie temperature $T_{c3}$ of the initializing layer 1117 is sufficiently higher than the Curie temperature $T_{c1}$ of the memory layer 1113, that is at least double $T_{c1}$. The initializing layer 1117 has a sufficiently stronger coercivity than that of the memory layer 1113. The initializing layer 1117 has a predetermined direction of magnetization which is set during production of the stack of magnetic layers 1103.

The thickness of the memory layer 1113 is preferably in the range of 200Å-600Å, and more preferably in the range of 300Å-400Å. The thickness of the initializing layer 1117 is preferably 100Å or more, even more preferably 200Å or more.

For the intermediate layer 1115, magnetic materials which have an antiferromagnetic phase transformation having a temperature hysteresis may be used. These materials are antiferromagnetic at room temperature, and have a phase transformation from antiferromagnetic to ferromagnetic at a temperature T1 which is higher than room temperature for rising temperatures, and a phase transformation from ferromagnetic to antiferromagnetic at temperature T2 which is higher than room temperature and lower than T1 for declining temperatures. Magnetic materials including FeRh, MnCrSb, HfTaFe, or MnPt etc. are preferable, FeRh being the most preferable. Using FeRh it is easy to obtain a magnetic film which gives rise to the required magnetic transformation at a temperature higher than room temperature.

When the thickness of the intermediate layer 1115 is too thin, the intermediate layer 1115 is not sufficient to shut off the exchange coupling between the memory layer 1113 and the initializing layer 1117. When the thickness of the intermediate layer 1115 is too thick, the necessary laser power for recording becomes too large. Therefore, the thickness of the intermediate layer 1115 is preferably in the range 50-800Å, more preferably in the range of 100-300Å. The total thickness of the magnetic layers 1113, 1115, 1117 forming the recording medium 1103 is preferably 1000Å or less as when the thickness is too large, the necessary laser power for recording becomes too large.

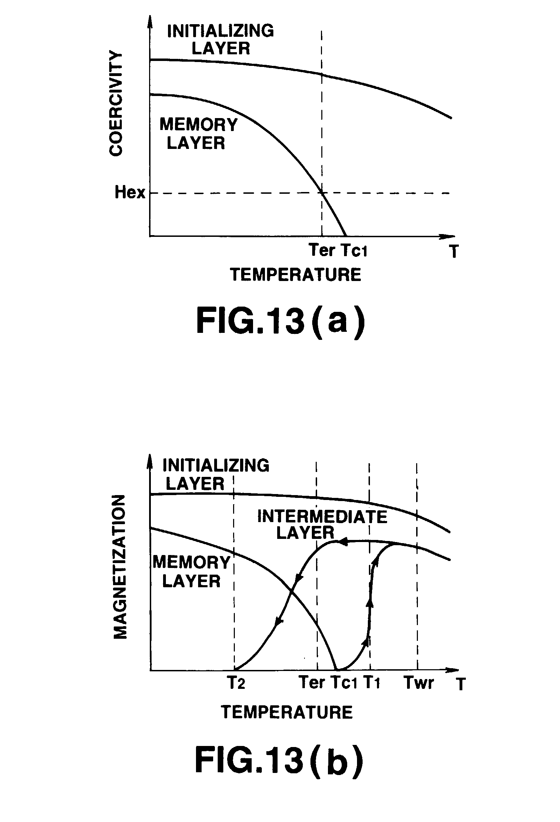

Figures 13(a), 13(b) are graphs showing the characteristics of the magnetic layers 1113, 1115, 1117. Figure 13(a) is a graph showing the relation between temperature T and coercivity. Figure 13(b) is a graph showing the relation between temperature T and magnetization. In Figure 13, $T_{c1}$ is the Curie temperature of the memory layer 1113, T1 and T2 are the temperatures at which the intermediate layer 1115 gives rise to a phase transformation, and $H_{ex}$ is the amplitude of the applied external magnetic field. The Curie temperature $T_{c3}$ of the initialization layer 1117 is too high to be shown in the graph and is located to the right side of the Figure.

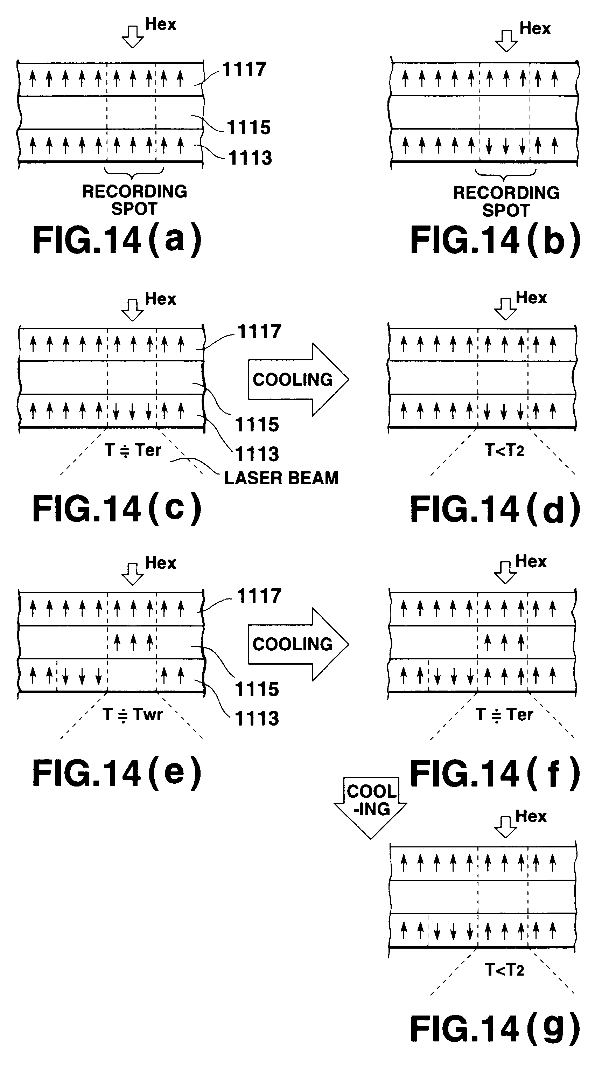

Referring now to Figure 14, Figures 14(a) and 14 (b) represent the two possible initial recording states of a recording region the magnetooptical recording medium prior to overwriting. Thus Figure 14(a) illustrates in the portion between the vertical dotted lines, a recording spot in which the magnetism in the memory layer 1113 is parallel to the magnetism of the initializing layer 1117. Figure 14(b) illustrates a recording region in which the magnetization in the previously recorded recording region of the memory layer 1113 is antiparallel to the magnetism of the initializing layer 1117.

At ambient or room temperature, the coercivity of the memory layer 1113 is sufficient to prevent reversal of the magnetism of the memory layer 1113 by the initialization layer 1117 in Figure 14(b) thus giving two stable recorded states.

Referring now also to Figures 14(c), 14(d), when the laser beam is used to irradiate the stack of magnetic layers 1103 and the temperature of the medium rises to the temperature $T_{er}$, where $T_{er}$ satisfies the following relation:

$$\text{Room temperature} < T2 < T_{er} < T1$$

As the temperature T of the stack of magnetic layers 1103 is less than T1, there is no phase transformation of the intermediate layer 1115 which remains antiferromagnetic. This causes magnetic isolation of the initializing layer 1117 from the memory layer 1113. As a result, the direction of magnetization of the memory layer 1113 aligns with the direction of the external magnetic field.

At the temperature $T_{er}$, the following conditions will be satisfied:

$$M_{s1:Ter} \bullet H_{ex} > M_{s1:Ter} \bullet H_{c1:Ter}$$

where

$M_{s1:Ter}$ is the saturation magnetization of the memory layer at $T_{er}$,
$H_{c1:Ter}$ is the coercivity of the memory layer 1113 at $T_{er}$,
$H_{ex}$ is the intensity of the external magnetic field.

Referring now also to Figure 14(d), in these conditions, if the stack of magnetic layers 1103 cools down to a temperature T which is T2 or less, by reducing the luminous energy of the laser beam, the direction of magnetization of the memory layer 1113 remains parallel to the external magnetic field.

Referring now to Figure 14(e), if the magnetic medium 1103 is heated to temperature $T = T_{WR}$ by irradiation by the laser, the following relations are satisfied.

$$T1 < T_{wr} < T_{c3}$$

$$M_{s3:Tw} \bullet H_{c3:Twr} > M_{s3:Twr} \bullet H_{ex}$$

where $M_{s3:Twr}$ is the saturation magnetization of the initializing layer 1117 at $T_{wr}$, and
$H_{c3:Twr}$ is the coercivity of the initializing layer 1117 at $T_{wr}$.

The intermediate layer 1115 undergoes a phase transformation at T1 and becomes ferromagnetic. At this time, the direction of magnetization of the initializing layer 1117 is reversed by the external magnetic field $H_{ex}$.

The direction of magnetization of the intermediate layer 1115 is determined by the transferred direction of magnetization of the initializing layer 1117. The magnetization direction of the intermediate layer 1115 will therefore remain the same until the intermediate layer 1117 undergoes a phase transformation from ferromagnetic to antiferromagnetic. That is, when the temperature of the stack of magnetic layers 1103 cools down from $T_{wr}$ to T2, the following relation is satisfied.

$$M_{s2} \bullet H_{ex} < \sigma_{w2}/(2h_2) - M_{s2} \bullet H_{c2}$$

where $M_{s2}$, $H_{c2}$ and $h_2$ are respectively the saturation magnetization, coercivity and thickness of the intermediate layer 1117, and
$\sigma_{w2}$ is the interface domain wall energy between the intermediate layer 1115 and the initializing layer 1117.

In this condition, if the magnetic layers 1103 cool down to temperature $T \approx T_{c1}$ by reducing the luminous energy of the laser, magnetization reappears in the memory layer 1113, and due to the exchange coupling force, the direction of magnetization of the intermediate layer 1115 is transferred to the memory layer 1113.

Even if the temperature of the stack of magnetic layers 1103 cools down to nearly $T_{er}$, as shown in Figure 14(f) the direction of magnetization of the memory layer 1113 remains the same because as can be seen from Figure 13(b) the magnetization of intermediate layer 1115 follows the ferromagnetic hysteresis loop.

In other words, the following relation is satisfied.

$$M_{s1} \bullet H_{ex} < \sigma_{w1}/(2h_1) - M_{s1} \bullet H_{c1}$$

where $M_{s1}$, $H_{c1}$ and $h_1$ are respectively the saturation magnetization, coercivity and thickness of the memory layer 1113, and
$\sigma_{w2}$ is the interface domain wall energy between the intermediate layer 1115 and the initializing layer 1115.

Finally, referring to Figure 14(g) as the temperature T of the stack of magnetic layers 1103 cools further and becomes T2 or less, the coercivity of the memory layer 1113 increases and the external magnetic field does not cause inversion of the direction of magnetization of the memory layer 1113.

In other words the following relation is satisfied.

$$M_{s1} \bullet H_{ex} < M_{s1} \bullet H_{c1}$$

It will be seen that in accordance with an aspect of the invention, it is possible to erase and record information simultaneously on the magnetooptic medium.

Regardless of whether the recording region of the memory layer 1113 is in the state shown in Figure 14(a) or the state shown in Figure 14(b), application of the laser beam at the lower power effective to heat the medium to $T_{er}$ as shown in Figure 14(c) will result in the recording state depicted in Figure 14(d).

On the other hand, application of the laser at the higher power effective to heat the stack of magnetic layers 1105 to approximately $T_{wr}$ as shown in Figures 14 (e) will lead to the second recording state shown in Figure 14(g). The lower temperature $T_{er}$ is however known as the erasing temperature, as this lower temperature may be used to cause all the recorded information in the memory layer to assume the state shown in Figure 14 (b).

The Curie temperature of the initializing layer 1117, $T_{c3}$ is preferably 300°C or more because if $T_{c3}$ is too low there is no power margin of the laser during the recording. T1 is preferably in the range of 150-350°C, more preferably in the range of 200-250°C, because if T1 is too low there is no power margin of laser during the erasing, whilst if T1 is too high the recording laser power becomes too large. T2 is preferably 100°C or more, more preferably in the range of 100-150°C because if T2 is too low there is the possibility that information is erased during the reproducing of the information. The difference between T1 and T2 is preferably 50°C or more, more preferably 100°C or more, because if the difference is too small there is no power margin of the laser during the erasing.

The Curie temperature of the memory layer 1113, $T_{c1}$ is preferably near to T1 because the direction of magnetization of the memory layer 1113 is stabilized whilst the magnetization of the intermediate layer 1115 is reduced during the erasing process.

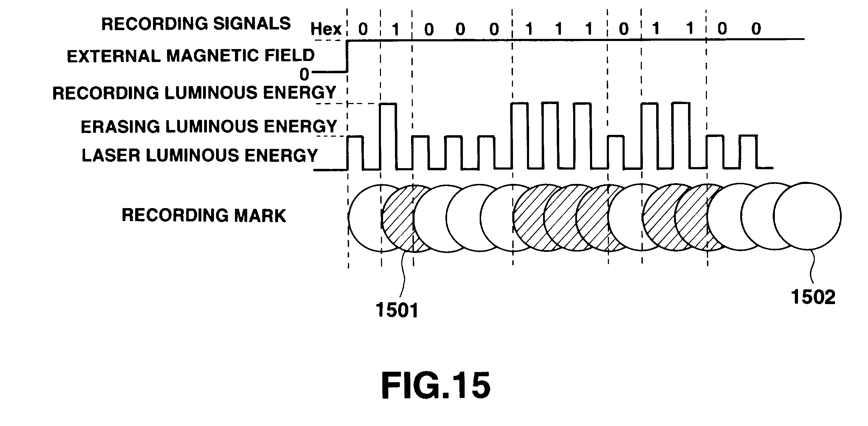

Figure 15 is a schematic illustration showing information recorded on the magnetooptic medium. As shown in Figure 15 the external magnetic field is applied continuously. The luminous energy of the laser is modulated into either "recording" luminous energy or "erasing" luminous energy. The recording luminous energy is the luminous energy which raises the temperature of the magnetic medium 1103 to $T_{wr}$. The erasing luminous energy is the laser luminous energy which raises the temperature of the magnetic medium 1103 to $T_{er}$. Where information is recorded on the magnetic medium 1103, recording marks 1501 as shown in Figure 15 are formed, 1502 denoting the beam spot of the laser.

As can be seen from Figure 15 the length of the recording marks 1501 can be smaller than the laser beam spot 1502. Also the width of the recording marks 1501 can be larger than the length of the recording marks 1501.

An experimental example of a magnetooptical recording medium in accordance with an embodiment of the invention follows.

<u>EXAMPLE</u>

A polycarbonate substrate including preformed track grooves was prepared. Using a sputtering apparatus, a protective SiN film of 800Å thickness (not shown in the Figures), a memory layer 1103 comprising a $Tb_{21}(Fe_{80}Co_{20})_{79}$ film of 350Å, an intermediate layer 1115 comprising a $Fe_{48}Rh_{52}$ film of 200Å, an initializing layer 1117 comprising a $Tb_{20}Co_{80}$ film of 300Å and a further protective layer comprising a SiN film of 800Å (not shown in the Figures) were formed in turn on the polycarbonate substrate 1105 to form the stack of magnetic layers 1103.

The medium was rotated at 2600rpm, and at a radial position of 37mm at a linear speed of 10m/sec a light spot was formed and recording at a luminous energy of 9.8mW and erasing at a luminous energy of 5.3mw were executed. A mark of mark length 0.78μm at a modulation frequency 6.4MHz was initially recorded and reproduced to obtain a good C/N of 46dB. An initial mark of mark length 0.40μm at a modulation frequency 12.5NHz was overwritten by a mark of 0.78μm. A good erasure ratio of 35dB was obtained.

It will be appreciated that further layers other than the magnetic layers and protective layers may be incorporated in a magnetooptical recording medium in accordance with the invention.

It will also be appreciated that the references to "Room Temperature" should be construed as meaning ambient temperatures.

**Claims**

1. A magnetooptical recording medium comprising:

   a memory layer (1113) having an out of plane preferred direction of magnetization and a Curie temperature $T_{c1}$;
   an intermediate layer (1115) comprising: a magnetic phase transformation material having a phase transformation from antiferromagnetic to ferromagnetic at temperature T1 for rising temperatures, and a phase transformation from ferromagnetic to antiferromagnetic at a temperature T2 for declining temperatures; and
   an initializing layer (1117) having a magnetization in a predetermined direction perpendicular to the layer and a Curie temperature Tc3;

   wherein,

   $$T2 < T_{c1} < T1 < T_{c3}.$$

2. A magnetooptical recording medium according to claim 1, wherein said intermediate layer (1115) contains FeRh as the main component.

3. A magnetooptical recording medium according to either of the preceding claims, wherein said memory layer (1113) and said initializing layer (1117) contain TbFe as the main component.

4. A magnetooptical recording medium according to any one of the preceding claims, wherein T2 is 100°C or more.

5. A magnetooptical recording medium according to any one of the preceding claims, wherein the difference between said T1 and said T2 is 100°C or more.

6. A magnetooptical recording medium according to any one of the preceding claims, wherein the difference between T1 and $T_{c1}$ is 50°C or less.

7. A magnetooptical recording medium according to any one of the preceding claims, wherein $T_{c3}$ is 300°C or more.

8. A magnetooptical recording medium according to any one of the preceding claims, wherein the initializing layer (1117) maintains the same direction of magnetization until $T_{c3}$.

9. A magnetooptical recording method using said magnetooptical recording medium according to any one of the preceding claims, comprising the steps of:

applying an external magnetic field having the opposite direction of magnetization to that of said initializing layer (1117); and either a first recording step of irradiating the medium to raise the temperature of said each layer to $T_{wr}$ which is higher than T1, and to give rise to a phase transformation to ferromagnetic in said intermediate layer (1115) to align the direction of magnetization of said memory layer (1113) with that of the initialization layer (1117); or a second recording step of irradiating the medium to raise the temperature of said each layer to $T_{er}$ which is equal or greater than $T_{c1}$ and is equal or less than T1, and to align the direction of magnetization of said memory layer (1113) with the direction of said external magnetic field with the intermediate layer (1115) being antiferromagnetic.

10. A magnetooptical recording method according to claim 9, wherein $T_{wr}$ is 200°C or more and 300°C or less.

11. A magnetooptical recording method according to claim 9 or 10, wherein $T_{er}$ is 100°C or more and 200°C or less.

**PRIOR ART**
# FIG.1

# FIG.2

RECORDING SIGNALS

0  1  0  0  0  1  1  1  0  1  1  0  0  0

MODULATION
MAGNETIC FIELD

Hex
0
Hex

RECORDING LUMINOUS ENERGY

LASER LUMINOUS ENERGY

RECORDING MARK

108

107

**PRIOR ART**

# FIG.3

EP 0 780 841 A2

PRIOR ART
# FIG.4 (a)

PRIOR ART
# FIG.4 (b)

MAGNETIC FIELD>Hex

T>Twr

**PRIOR ART**
# FIG.5(a)

MAGNETIC FIELD>Hex

T>Twr

LASER
BEAM

**PRIOR ART**
# FIG.5(b)

112    113

110

↓ EXTERNAL MAGNETIC FIELD

102

LASER BEAM

103    111

**PRIOR ART**
# FIG.6

123  122

110

120  121

**PRIOR ART**
# FIG.7

PRIOR ART

**FIG.8**

EP 0 780 841 A2

INITIALIZING LAYER

WRITING LAYER

MEMORY LAYER

SWITCHING LAYER

Hex

Tc1 Tcr  Tc2  Twr Tc3  T

TEMPERATURE

**PRIOR ART**
# FIG.9(a)

INITIALIZING LAYER

WRITING LAYER

MEMORY LAYER

SWITCHING LAYER

Tc1 Tcr  Tc2  Twr Tc3  T

TEMPERATURE

**PRIOR ART**
# FIG.9(b)

**PRIOR ART**
# FIG.10(a)

**PRIOR ART**
# FIG.10(b)

1109    1111

1103

Hex EXTERNAL MAGNETIC FIELD

1105

LASER BEAM

1101    1107

# FIG.11

1117

1108

1115

1113    1105

# FIG.12

INITIALIZING
LAYER

COERCIVITY

MEMORY
LAYER

Hex

Ter Tc1          T

TEMPERATURE

# FIG.13(a)

INITIALIZING
LAYER

MAGNETIZATION

INTERMEDIATE
LAYER

MEMORY
LAYER

T2      Ter Tc1 T1    Twr    T

TEMPERATURE

# FIG.13(b)

Hex

1117

1115
1113

RECORDING
SPOT

**FIG.14(a)**

Hex

RECORDING
SPOT

**FIG.14(b)**

Hex

1117

1115
1113

T ≒ Ter

LASER BEAM

**FIG.14(c)**

COOLING

Hex

T<T2

**FIG.14(d)**

Hex

1117

1115
1113

T ≒ Twr

**FIG.14(e)**

COOLING

Hex

T ≒ Ter

**FIG.14(f)**

COOL
-ING

Hex

T<T2

**FIG.14(g)**

19

FIG.15

EP 0 780 841 A2